# EUROPÄISCHE PATENTANMELDUNG

(11) **EP 1 749 768 A1**
(43) Veröffentlichungstag der Anmeldung: **07.02.2007**
(21) Anmeldenummer: 05016135.5
(22) Anmeldetag: 26.07.2005
(51) Int. Cl.: B65G 53/56, B65G 53/24, F16K 11/065

(54) **Leitungsweiche und Saugförderanlage**

(71) Anmelder: TSDconmatic GmbH & Co. KG, 27721 Ritterhude (DE)
(72) Erfinder: Keese, Gerd, Dipl.-Oek, 27721 Ritterhude (DE); Häsemeyer, Hans-Dieter, Dipl.-Ing., 27721 Ritterhude (DE)

(57) **Zusammenfassung**

Die Erfindung betrifft eine Leitungsweiche mit einer ersten Anschlussseite, insbesondere Eingangsseite, einer zweiten Anschlussseite, insbesondere Ausgangsseite, einer Schieberplatte 29 zwischen beiden Anschlussseiten, wobei die ersten Anschlussseite eine erste Anschlussplatte 24, welche mit mehreren ersten Anschlussstutzen 25-27 verbunden ist, und die zweite Anschlussseite eine zweite Anschlussplatte 30 aufweist, welche mit mehreren zweiten Anschlussstutzen 32-34 verbunden ist. Um eine kompaktere Bauweise derartiger Leitungsweichen zu erzielen, ist erfindungsgemäß vorgesehen, dass die Anzahl der ersten Anschlussstutzen 25-27 der Anzahl der zweiten Anschlussstutzen 32-34 entspricht, die Enden der ersten Anschlussstutzen 25-27 den Enden der zweiten Anschlussstutzen 32-34 gegenüberliegen, die Schieberplatte 29 unmittelbar benachbart zu und zwischen beiden Anschlussplatten 24, 30 angeordnet ist, wobei die Schieberplatte 29 parallel zu den Anschlussplatten 24, 30 verschiebbar ist, und die Schieberplatte 29 wenigstens einen Teil der sich gegenüberliegenden Anschlussstutzen 25-27, 32-34 von erster und zweiter Anschlussseite gegeneinander absperrt.

Die Erfindung betrifft ferner eine besondere Saugförderanlage mit einer derartigen Leitungsweiche.

## Beschreibung

Die Erfindung betrifft eine Leitungsweiche mit einer ersten Anschlussseite, insbesondere Eingangsseite, einer zweiten Anschlussseite, insbesondere Ausgangsseite, einer Schieberplatte zwischen beiden Anschlussseiten, wobei die ersten Anschlussseite eine erste Anschlussplatte, welche mit mehreren ersten Anschlussstutzen verbunden ist, und die zweite Anschlussseite eine zweite Anschlussplatte 30 aufweist, welche mit mehreren zweiten Anschlussstutzen verbunden ist.

Die Erfindung betrifft ferner eine Saugförderanlage für die Entnahme von festem, rieselfähigen Schüttgut aus einer Lagerstätte mit mehreren Austragssonden zum Austragen des Schüttguts aus der Lagerstätte, mehreren Ansaugförderleitungen, wobei jeweils eine mit einer Austragssonde verbunden ist, einer Leitungsweiche, insbesondere der o.g. Art, welche auf ihrer Eingangsseite mit den Ansaugförderleitungen und auf ihrer Ausgangsseite mit einer Hauptförderleitung verbunden ist, einem Abscheider zum Trennen des Schüttguts vom Trägerstrom, wobei der Abscheider mit der Hauptförderleitung verbunden ist, mit einer Rückleitung zur wenigstens teilweisen Rückführung des Trägerstroms, und einem Vakuumerzeuger, der in der Hauptförderleitung und/oder der Rückleitung angeordnet ist.

Leitungsweichen der o.g. Art sind bspw. aus DE 1 877 476 bekannt. Eine weitere, ähnliche Leitungsweiche ist in DE 41 14 901 A1 beschrieben. Bei diesen Leitungsweichen werden flexible Rohrteile bzw. Schläuche verwendet, welche eine flexible Verbindung zwischen einer Rohrleitung einer ersten Seite mit der weiterführenden Rohrleitung einer zweiten Seite schaffen.

Ferner sind Leitungsweichen aus DE 1 844 584 bekannt, bei denen zwischen zwei Anschlussseiten ein verschiebbarer Kolben vorgesehen ist, um eine Leitung einer ersten Anschlussseite mit einer von mehreren Leitungen einer zweiten Anschlussseite zu verbinden.

Diese bekannten Leitungsweichen haben jedoch den Nachteil, dass sie eine sehr große, insbesondere lange, Bauform aufweisen. Hierdurch werden die Einsatzmöglichkeiten derartiger bekannter Leitungsweichen - gerade wenn nur wenig Platz zur Verfügung steht - begrenzt. Ferner verursacht eine große Bauform aber auch hohe Kosten aufgrund der großen Anzahl von Teilen und des verwendeten Materials.

Saugförderanlagen der eingangs genannten Art werden für Schüttgüter aus Lagerstätten wie Kellerräumen, Abtrennungen größerer Lagerflächen (Haufwerk) sowie aus Behältern und Siloanlagen und dergleichen eingesetzt. Bspw. werden über Saugförderanlagen Brennstoff-Pellets und Holzabfälle aus Heizmateriallagern, sowie Weizen, Roggen, Gerste, Mais oder anderes Getreide aus Halden, sowie Kunststoffgranulate und chemische Feststoff-Zutaten aus Silos und Behältern gefördert.

Das Schüttgut wird üblicherweise über einen Vakuumerzeuger über eine Saugleitung und eine Saugöffnung angesaugt und über ein Abscheidesystem eines Heizkessels, eines Silofahrzeugs, einer Verteilerstation für Agrarprodukte/Viehfutter oder eines Vorlagebehälters einer Anlage zugeführt.

Die Trennung des jeweiligen Fördergutes vom Trägerstrom, z.B. Luft, erfolgt über einen Abscheider. Hierbei können unterschiedliche Arten von Abscheidern zum Einsatz kommen. Soll z.B. der Feinanteil mit verwertet werden, verwendet man einen Totalabscheider mit Filter. Soll jedoch der Feinanteil separat gesammelt werden, dann erfolgt primär die Stoffabscheidung in einem Vorabscheider und der Feinanteil wird in einem Hochleistungszyklon-Abscheider abgeschieden. Der abgeschiedene Trägerstrom (z.B. Luft) kann mit oder ohne Reststaub der Förderung wieder als Rückluft zugeführt werden.

Ein wichtiger Bestandteil von pneumatischen Saugförderanlagen sind die o.g. Verteiler bzw. Leitungsweichen, welche das Schüttgut verteilen bzw. zuteilen. Neben Weichen kommen Klappkästen und Drehrohrverteiler in verschiedenen Ausführungen sowie Umschaltventile mit Drehkücken und Drehschieber zum Einsatz.

Ein Beispiel einer herkömmlichein Saugförderanlage ist eine Fördereinrichtung für eine Heizkesselanlage, die mit eingelagerten Holzpellets aus einem Keller beschickt wird. Automatische Förderanlagen für Holzpellets sind bekannt. Die Entnahme der Holzpellets aus einem Keller erfolgt über mehreren Saugöffnungen, die über ein Schlauchsystem an einem Umschaltventil zusammengeführt werden. Über die Steuerung der Heizkesselanlage kann der Förderweg wahlweise über das Umschaltventil angewählt werden. Die Saugförderanlagen werden oft als Umluftsystem ausgeführt, so dass keine separate Zuluft zum Lager erforderlich ist.

Über die Rückluft kann eine Auflockerung des Schüttgutes erreicht werden. Eine Auflockerung des Schüttgutes ist jedoch nur in beschränkten Grenzen möglich. Ferner führt eine derartige Konstruktion zu einem erhöhten Montageaufwand. Schließlich ist die Rückluft auch mit erhöhten Reststaubmengen belastet, welche zu einer erhöhten und unter Umständen gefährlichen Konzentration der Staubmenge führen können.

Jede der Saugöffnungen ist über eine Rücklaufleitung des angewählten Förderweges mit einem Umschaltventil verbunden. Bekannte Umschaltventile (z.B.: Drehkücken und Drehschieber) sind für diesen Zweck zwar geeignet, jedoch sehr aufwendig. Bspw. sind für die Verbindung der einzelnen Förderwege zwei oder drei Antriebe erforderlich. Zwar existieren weitere brauchbare Systeme, welche in der Industrie eingesetzt werden. Diese sind jedoch aufwendig und daher teuer und haben einen hohen Druckverlust.

Bei den bekannten Systemen erfolgt zudem die Rückführung der Saugluft in die unmittelbare Umgebung der Austragssonde. Dies führt dazu, dass bei mehreren Austragssonden eine entsprechende Anzahl von Rückführungen vorgesehen sein muss. Sind bspw. drei Austragssonden vorhanden, so müssen auch drei Rückführungen vorgesehen sein.

Da regelmäßig immer nur eine Austragssonde von mehreren im Betrieb ist, d.h. das Schüttgut immer nur von einer Austragssonde aus der Lagerstätte ausgetragen wird, werden die jeweils anderen Sonden - pneumatisch betrachtet - abgeschaltet. Dies geschieht über bspw. entsprechende Weichen, welche jeweils die sich im Betrieb befindende Austragssonde mit der Hauptsaugförderleitung pneumatisch verbinden und dabei die anderen Austragssonden abriegeln.

Wenn aber die Rückführungen unmittelbar am Ort der Austragssonden in die Lagerstätte einmünden, was dem Zweck dient, das Schüttgut aufzulockern, müssen die Rückführungen der sich nicht im Betrieb befindenden Austragssonden ebenso wie die Austragssonden selbst abgeriegelt werden. Hierzu sind dann ebenfalls bspw. Weichen oder dergleichen erforderlich.

Diese bekannte Konstruktion hat aber den Nachteil, dass entweder die Weichen doppelt vorhanden oder als Doppelweichen ausgebildet sein müssen.

Der Erfindung liegt daher das Problem zugrunde, Leitungsweichen sowie Saugförderanlagen mit derartigen Leitungsweichen zu vereinfachen.

Die Erfindung löst dieses Problem durch eine Leitungsweiche der eingangs genannten Art, bei der die Anzahl der ersten Anschlussstutzen der Anzahl der zweiten Anschlussstutzen entspricht, die Enden der ersten Anschlussstutzen den Enden der zweiten Anschlussstutzen gegenüberliegen, die Schieberplatte unmittelbar benachbart zu und zwischen beiden Anschlussplatten angeordnet ist, wobei die Schieberplatte parallel zu den Anschlussplatten verschiebbar ist und die Schieberplatte wenigstens einen Teil der sich gegenüberliegenden Anschlussstutzen von erster und zweiter Anschlussseite gegeneinander absperrt.

Diese Konstruktion ermöglicht eine sehr kompakte, insbesondere - in Förderrichtung gesehen - kurze Bauweise der Leitungsweiche, da die Anschlussstutzen von Eingangsseite und Ausgangsseite starr zueinander angeordnet sind und lediglich durch eine quer dazu verschiebbare Schieberplatte zumindest teilweise gegeneinander abgesperrt werden können. Somit ist lediglich die Schieberplatte verschiebbar auszubilden, während die Anschlussstutzen bzw. daran angeschlossene Rohrverbindungen nicht-verschiebbar bzw. ortsfest angeordnet sind. Hierdurch reduziert sich die Anzahl der beweglichen Teile der Leitungsweiche. Insbesondere sind keine beweglichen Rohrabschnitte bzw. Schlauchverbindungen notwendig, um einen Wechsel von zu- bzw. abführenden Förderleitungen vorzunehmen.

Durch die hieraus resultierende kompaktere Bauweise ergibt sich ferner ein geringerer Materialaufwand. Insgesamt ermöglicht die Erfindung daher eine kostengünstigere Herstellung von Leitungsweichen.

Die Erfindung löst das o.g. Problem ferner durch eine Saugförderanlage der eingangs genannten Art, bei der nur eine Rückleitung den rückgeführten Trägerstrom mehrerer Austragssonden zur Lagerstätte zurückführt.

Die Erfindung sieht nur eine gemeinsame Rückleitung des rückgeführten Trägerstroms vor und zwar für alle Austragssonden gemeinsam. Die Rückführung des rückgeführten Trägerstroms wird somit nicht direkt in die unmittelbare Umgebung der Austragssonden zurückgeführt.

Bevorzugterweise mündet die Rückleitung in einem unterhalb der Lagerstätte vorgesehenen gemeinsamen schüttgutfreien Raum, in den auch die Ansaugöffnungen der jeweiligen Austragssonden münden. Oftmals sind Lagerstätten trichterförmig aufgebaut, wobei sich am tiefsten Punkt bzw. an den tiefsten Punkten der Lagerstätte die Austragseinrichtungen befinden. Unterhalb der Schrägen des bzw. der Trichter bilden sich somit Räume, die zur Luftverteilung genutzt werden können. Hierzu braucht lediglich ein einheitlicher Zugang zu diesem schüttgutfreien Raum geschaffen zu werden, in den die Rückleitung mündet. Die Austragssonden beziehen dann ihre Ansaugluft zu einem nennenswerten Anteil aus diesem schüttgutfreien Raum. Eine Rückführung des Trägerstroms über die Leitungsweiche ist somit nicht erforderlich. Der rückgeführte Trägerstrom wird vielmehr nur als Ansaugluft für das System verwendet, nicht jedoch in einem wesentlichen Anteil zur Auflockerung des Schüttguts im Bereich der Austragssonden.

Weitere bevorzugte Ausführungsformen ergeben sich aus den Unteransprüchen sowie aus den anhand der beigefügten Zeichnung näher erläuterten Ausführungsbeispiele. In der Zeichnung zeigt:
- Fig. 1: eine Saugförderanlage gemäß einem Ausführungsbeispiel der Erfindung;
- Fig. 2: eine Leitungsweiche gemäß einem Ausführungsbeispiel der Erfindung in perspektivischer Ansicht in einem zusammengebauten Zustand;
- Fig. 3: die Leitungsweiche aus Fig. 2 in einem geöffneten Zustand und
- Fig. 4: die Leitungsweiche gemäß Fig. 2 bzw. 3 in einer seitlichen Ansicht.

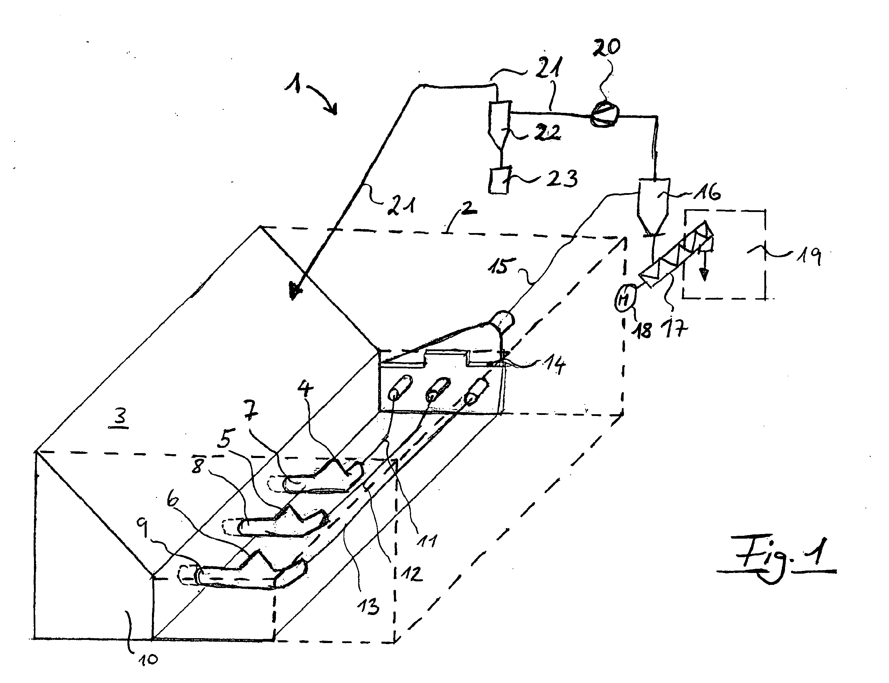

Fig. 1 zeigt eine Saugförderanlage 1 mit einer Lagerstätte 2 zum Lagern bzw. zur Aufnahme von festem rieselfähigem Schüttgut (nicht dargestellt). Die Lagerstätte 2 ist, im Querschnitt betrachtet, trichterartig ausgebildet. Insbesondere verfügt sie über schräge Wandseiten 3, welche dazu beitragen, dass das Schüttgut in einem mittleren Bereich der Lagerstätte 2 gesammelt wird, auch wenn der Schüttgutvorrat abnimmt. In einem unteren Bereich der Lagerstätte 2 sind mehrere, bspw. drei Austragssonden 4, 5, 6 vorgesehen, welche jeweils über einen Ansaugstutzen 7, 8, 9 verfügen, über den Luft aus einem Nebenraum, nämlich einem gemeinsamen schüttgutfreien Raum 10 angesaugt werden kann. Ausgangsseitig sind die Austragssonden 4, 5, 6 mit Ansaugförderleitungen 11, 12, 13 verbunden, welche zu einer Leitungsweiche 14, nämlich einer sog. Registerweiche, führen. Die Leitungsweiche 14 sorgt dafür, dass jeweils nur eine Ansaugleitung 11, 12 oder 13 mit einer Hauptsaugförderleitung 15 pneumatisch in Verbindung steht. Diese Hauptsaugförderleitung 15 führt zu einem Abscheider 16, der bspw. als Zyklon-Abscheider oder als Total-Abscheider ausgebildet ist.

Unterhalb des Abscheiders 16 befindet sich ein Austragsorgan 17, das bspw. als von einem Motor 18 angetriebene Schnecke oder Zellenradschleuse oder dergleichen ausgebildet ist. Am Ende dieses Austragsorgans 17 fällt das Schüttgut in seinen Zielort 19, bspw. in einen Heizkessel, einen Vorlagebehälter, einen Container, eine Lkw-Beladungsstation oder ähnliches.

Der Abscheider 16 steht ferner in Verbindung mit einem Vakuumerzeuger 20, bspw. einer Saugturbine. Dieser Vakuumerzeuger 20 befindet sich bereits in einer Rückleitung 21. Bei einer alternaiven Ausführungsform ist er jedoch in der Hauptsaugförderleitung 15 angeordnet.

In Förderrichtung betrachtet nach dem Vakuumerzeuger 20 folgt ein Staubabscheider 22, der insbesondere als Hochleistungsabscheider ausgebildet ist und vorzugsweise einen Aufnahmebehälter für Feinstaub 23 umfasst.

Die auf diese Weise mittels des Staubabscheiders gereinigte Förderluft wird weiter über die Rückleitung 21 zurück zur Lagerstätte geführt und zwar in den schüttgutfreien Raum 10 unterhalb des mit Schüttgut gefüllten Raumes der Lagerstätte 2. Dieser Raum weist ein relativ großes Volumen auf. In diesen Raum münden, wie bereits oben ausgeführt, Ansaugstutzen 7, 8, 9 der Austragssonden 4, 5, 6.

Über den Vakuumerzeuger 20, der mit dem Abscheider 16 in Verbindung steht, wird in der Hauptsaugförderleitung 15 ein Unterdruck erzeugt. Dieser Unterdruck bildet sich auch in der Leitungsweiche 14 aus. Die Leitungsweiche 14 verbindet eine der Ansaugleitungen 11, 12, 13 mit einer der Austragssonden 4, 5, 6. An dieser jeweiligen Austragssonde erfolgt ein Druckausgleich, da die Austragssonde zum Raum, in dem sich das Schüttgut befindet, offen ist. Es fließt somit ein Luft-Förderstrom. Ferner erfolgt ein Ausgleich über den jeweiligen Ansaugstutzen 7, 8, 9 der entsprechenden mit Unterdruck beaufschlagten Austragssonde 4, 5 bzw. 6. Das Schüttgut, bspw. Holzpellets, wird über die jeweilige Austragssonde dosiert in die jeweilige Ansaugleitung 11, 12, 13 gegeben. Über eine Steuerung am Zielort 19, bspw. einem Heizkessel, und die Leitungsweiche 14 wird nur diejenige Austragssonde 4, 5, 6 angesteuert, in deren Bereich ausreichend Schüttgut, z.B. Holzpellets, gelagert sind.

Förderluft wird über den Staubabscheider 22 und die Rückleitung 21 in den schüttgutfreien Raum 10 zurückgeführt. Eine Rückführung der Förderluft über die Leitungsweiche 14 oder eine andere Leitungsweiche ist daher nicht erforderlich. Die Rückluft wird lediglich als Ansaugluft für die Anlage verwendet. Eine Auflockerung im Bereich der jeweiligen Austragssonde über die Rückluft wird aufgrund der besonderen Ausbildung der Austragssonden, wie in DE 103 24 115 A1 beschrieben, nicht benötigt.

Diese Austragssonden 4, 5, 6 sind dadurch ausgezeichnet, dass aufgrund einer besonderen Luftumlenkung innerhalb der jeweiligen Austragssonde und durch eine besondere Geometrie des Austrittskanals der Sonde, nämlich von einer im wesentlichen dreieckförmigen oder trapezförmigen Gestalt kontinuierlich in eine runde Gestalt übergehend, die Schüttgutteilchen, z.B. Holzpellets, störungsfrei aufgenommen und zum Zielort 19, bspw. zu einem Vorlagebehälter eines Heizkessels oder einer Verarbeitungseinheit gefördert werden. Ein Lufteintrittsstutzen der Sonde liegt außerhalb des Schüttgutbehälters, so dass die Förderluft nicht dem Behälter entnommen werden muss, sondern der Umgebung entnommen werden kann.

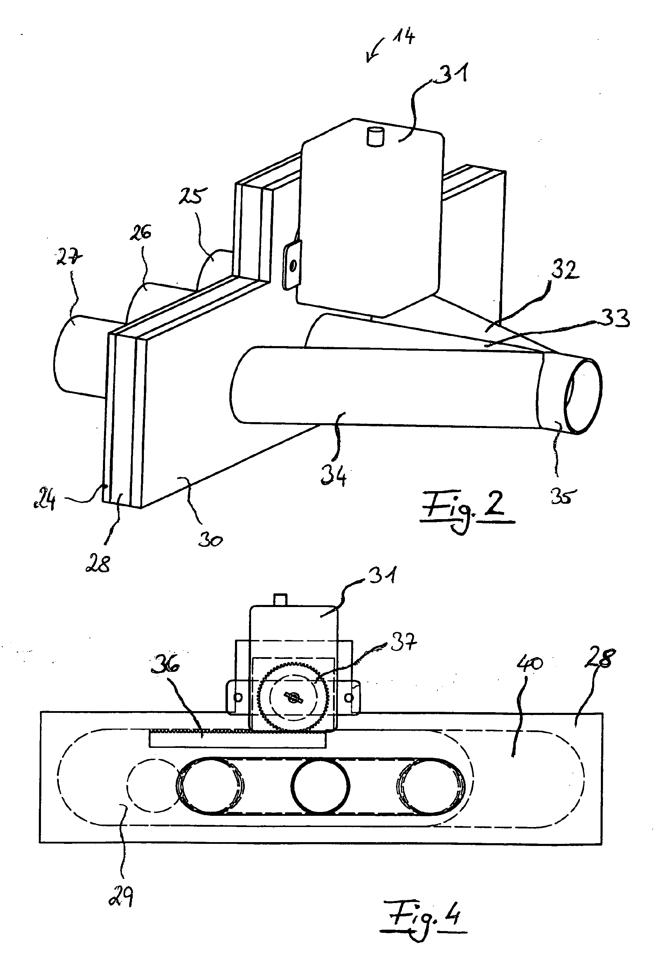

Ein weiterer Bestandteil der Saugförderanlage 1 ist die Leitungsweiche 14, die nachfolgend näher anhand der Figuren 2 bis 4 erläutert wird.

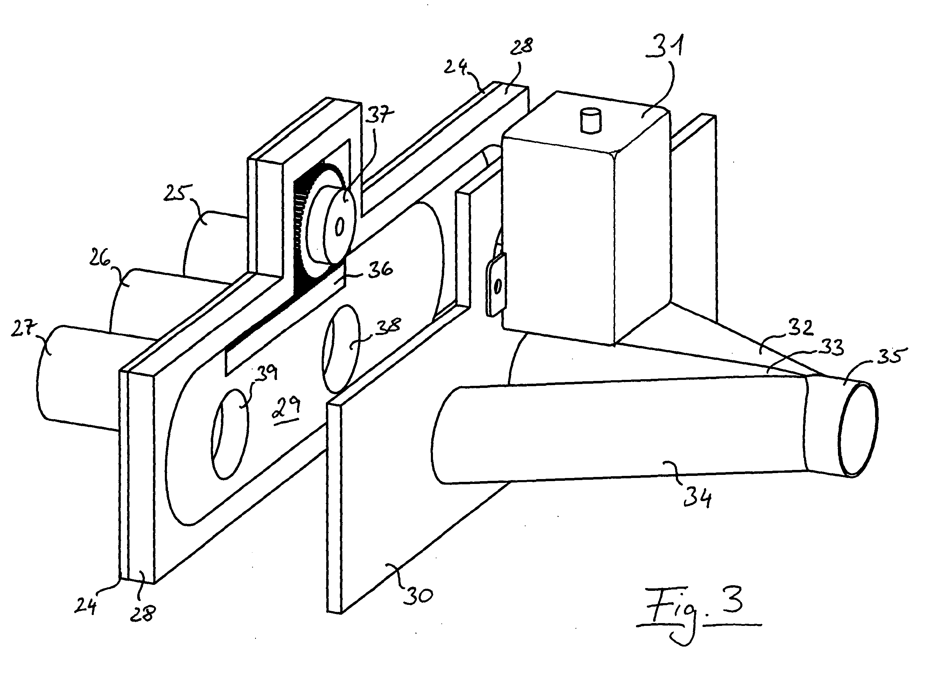

Fig. 2 zeigt die Leitungsweiche 14 im zusammengebauten Zustand. An einer Grundplatte 24 sind mehrere, nämlich z.B. gemäß Fig. 2 drei Ansaugrohrstutzen 25, 26, 27 angeformt. Die Grundplatte 24 trägt ferner eine Aufnahmeplatte 28 zur Aufnahme eines Schieberegisters bzw. einer Schieberplatte bzw. Schiebers 29 (Fig. 3 und 4).

An der Aufnahmeplatte 28 wird eine Frontplatte 30 befestigt, welche wiederum eine Steuerungseinheit 31 trägt. Ferner sind an der Frontplatte 30 mehrere zusammenlaufende Rohrabschnitte 32, 33, 34 angeformt, welche in einem gemeinsamen Hauptrohrstutzen 35 münden.

Der Schieber 29 weist eine Zahnstange 36 auf, welche in eine Ausnehmung des Schiebers 29 eingepasst ist. Der Schieber 29 kann somit linear - oder bei einer alternativen Ausführung kreisbogenförmig - verschoben werden, und zwar indem ein Zahnradritzel bzw. Antriebsritzel 37 mittels eines in der Steuerungseinheit 31 untergebrachten Motors gedreht wird. Der Schieber 29 wird nicht wie bei herkömmlichen Umschaltventilen direkt mit mehreren Antrieben über die Drehung einer Scheibe oder Kücken umgeschaltet, sondern mit der Zahnstange 36 und dem Antriebsritzel 37 sowie den daran angeschlossenen Antriebsmotor linear (oder kreisbogenförmig) verschoben.

Der Schieber 29 hat in dem dargestellten Ausführungsbeispiel zwei Bohrungen 38, 39, die bei einer Drehung des Antriebsmotors um einen vorbestimmten Winkel, bspw. von 45° deckungsgleich mit einer der Öffnungen der Ansaugrohrstutzen 25, 26 oder 27 in Übereinstimmung gebracht werden können, während die anderen beiden Ansaugrohrstutzen verdeckt sind und dort folglich kein Förderstrom fließen kann. Dank dieses Schiebers kann jeder Ansaugrohrstutzen 25, 26, 27 einfach und sicher mit der Hauptsaugförderleitung pneumatisch verbunden werden.

Die Grundplatte 24 der Leitungsweiche 14 ist ferner derart gestaltet, dass sie direkt an der Behälterwand der Lagerstätte 2 oder an einer Kellerwand bzw. Silowand oder an einem geeigneten Träger befestigt werden kann.

Für spezielle Anwendungen, bei denen eine erhöhte Dichtigkeit gefordert wird, ist die Leitungsweiche 14 ferner mit einer Kunststoff-Dichtung oder einer aufblasbaren Dichtung ausgestattet, welche das Austreten von Stäuben aus der Leitungsweiche 14 verhindert.

Fig. 4 zeigt ferner die Aussparung 40 in der Aufnahmeplatte 28, innerhalb derer sich der Schieber 29 linear bewegen kann. Vorzugsweise ist die genannte Dichtung im Bereich dieser Aussparung 40 vorgesehen.

In dem in den Fig. 2 bis 4 dargestellten Ausführungsbeispiel weist die Leitungsweiche 14 drei Ansaugrohrstutzen zum Abschluss von drei Ansaugleitungen auf, während der Schieber 29 zwei Bohrungen aufweist. Diese Anzahlen haben sich in der Praxis als besonders günstig herausgestellt. Die Erfindung ist jedoch nicht auf diese Anzahlen beschränkt. Vielmehr kann der Schieber auch mit nur einer Bohrung versehen sein. Ebenso können aber auch nur zwei oder mehr als drei Ansaugrohrstutzen an der Leitungsweiche 14 vorgesehen sein. Dabei kann dann auch der Schieber mehr als nur zwei Bohrungen aufweisen. Die jeweilige Anzahl hängt insbesondere von der Größe der Lagerstätte ab, welche einen wesentlichen Einfluss auf die Anzahl der Austragssonden hat. Die Anzahl der Austragssonden wiederum bestimmt die Anzahl der anzuschließenden Ansaugrohrstutzen der Leitungsweiche. Selbstverständlich ist es aber auch möglich, mehrere Leitungsweichen parallel und in Reihe zu betreiben.

Eine Hauptanwendung der beschriebenen Leitungsweiche ist eine Saugförderanlage, wie im Zusammenhang mit Fig. 1 beschrieben, insbesondere für Holzpellets und dergleichen bspw. zur Versorgung einer Heizungsanlage mit Holzpellet-Befeuerung.

Weitere Verwendungsmöglichkeiten dieser Leitungsweiche ergeben sich in der chemischen-/pharmazeutischen und Kunststoff verarbeitenden Industrie, sowie in Agrar- und Düngemittel verarbeitenden Betrieben.

Bspw. werden in der Kunststoff verarbeitenden Industrie oftmals Zutatenstoffe und Rohmaterialien aus größerer Entfernung von einer zentralen Lagerstätte, bspw. einem Trockner, einem Einlagerungsbehälter oder Silo in einzeln geführten Rohrleitungen zu mehreren Verarbeitungsmaschinen, bspw. SpritzgussMaschinen, getrennt geführt. Mit der beschriebenen Leitungsweiche kann das zu fördernde Material über einen zentralen Strang aus dem Vorratsbehälter in die Nähe der Spritzgussmaschinen bis zu einer derartigen Leitungsweiche gefördert werden. Von dieser Leitungsweiche können dann einzelne Rohrleitungen zu den einzelnen Arbeitungsmaschinen verzweigen und das entsprechende Material dorthin fördern. Hierdurch entfällt eine (zumindest funktionale) Parallelität mehrerer separater langer Förderstrecken, wodurch erheblich an Rohrleitung eingespart werden kann. Es kann nämlich eine zentrale Förderstrecke genutzt werden, um mehrere Verarbeitungsmaschinen, wie z.B. die vorstehend genannten Spritzguss-Maschinen oder Extruder zu beschicken. Hierbei verläuft der Förderstrom von einer zentralen Quelle zu mehreren Zielorten. Insofern unterscheidet sich die Beschaltung der Leitungsweiche von dem in Fig. 1 erläuterten Ausführungsbeispiel, bei dem die Leitungsweiche Material von mehreren Quellen zu einem Zielort steuert. Die erfindungsgemäße Leitungsweiche ist somit nicht auf Anwendungsmöglichkeiten gemäß der im Zusammenhang mit Fig. 1 beschriebenen Saugförderanlage beschränkt.

Dank der Erfindung ist es ferner bspw. bei Saugförderanlagen möglich, ohne Leitungsweichen im Bereich der Rückführung der Saugluft zur Lagerstätte auszukommen. Die Erfindung vereinfacht somit wesentlich den Aufbau von Saugförderanlagen und reduziert damit auch den Wartungsaufwand und somit die Betriebskosten.

## Patentansprüche

1. Leitungsweiche mit einer ersten Anschlussseite, insbesondere Eingangsseite, einer zweiten Anschlussseite, insbesondere Ausgangsseite, einer Schieberplatte (29) zwischen beiden Anschlussseiten, wobei die erste Anschlussseite eine erste Anschlussplatte (24), welche mit mehreren ersten Anschlussstutzen (25-27) verbunden ist, und die zweite Anschlussseite eine zweite Anschlussplatte (30) aufweist, welche mit mehreren zweiten Anschlussstutzen (32-34) verbunden ist,
**dadurch gekennzeichnet, dass**
die Anzahl der ersten Anschlussstutzen (25-27) der Anzahl der zweiten Anschlussstutzen (32-34) entspricht, die Enden der ersten Anschlussstutzen (25-27) den Enden der zweiten Anschlussstutzen (32-34) gegenüberliegen, die Schieberplatte (29) unmittelbar benachbart zu und zwischen beiden Anschlussplatten (24, 30) angeordnet ist, wobei die Schieberplatte (29) parallel zu den Anschlussplatten (24, 30) verschiebbar ist und die Schieberplatte (29) wenigstens einen Teil der sich gegenüberliegenden Anschlussstutzen (25-27, 32-34) von ersten und zweiter Anschlussseite gegeneinander absperrt.

2. Leitungsweiche nach Anspruch 1,
**dadurch gekennzeichnet, dass**
die Schieberplatte (29) linear verschiebbar angeordnet ist.

3. Leitungsweiche nach Anspruch 1,
**dadurch gekennzeichnet, dass**
die Schieberplatte (29) kreisbogenartig verschiebbar angeordnet ist.

4. Leitungsweiche nach einem der vorhergehenden Ansprüche,
**dadurch gekennzeichnet, dass**
die Schieberplatte (29) mit einem Antrieb zum Verschieben der Schieberplatte (29) in Wirkverbindung steht.

5. Schieberplatte nach Anspruch 4,
**dadurch gekennzeichnet, dass**
die Schieberplatte (29) eine Zahnstange (36) aufweist, die mit einem Zahnradritzel (37) des Antriebs im Eingriff steht.

6. Leitungsweiche nach einem der vorhergehenden Ansprüche,
**dadurch gekennzeichnet, dass**
die Schieberplatte (29) eine oder mehrere Bohrungen (38, 39) aufweist, wobei bei jeder Stellung des Antriebs immer nur höchstens eine Bohrung (38, 39) deckungsgleich mit einem von mehreren Paaren gegenüberliegender Anschlussstutzen (25-27, 32-34) ist, während die anderen Paare gegenüberliegender Anschlussstutzen (25-27, 32-34) jeweils gegeneinander abgesperrt sind.

7. Leitungsweiche nach einem der vorhergehenden Ansprüche,
**dadurch gekennzeichnet, dass**
die Leitungsweiche (14) Befestigungselemente zum Befestigen der Leitungsweiche (14) an einer Wand oder einem Träger aufweist.

8. Leitungsweiche nach einem der vorhergehenden Ansprüche,
**dadurch gekennzeichnet, dass**
die Leitungsweiche (14) eine Nut oder einen Absatz zur Aufnahme einer Dichtung aufweist zur Abdichtung der Schieberplatte (29) gegen die Umgebung der Leitungsweiche (14).

9. Leitungsweiche nach einem der vorhergehenden Ansprüche,
**dadurch gekennzeichnet, dass**
die ersten Anschlussstutzen (25-27) jeweils mit je einer Förderleitung (11-13) verbindbar sind und die zweiten Anschlussstutzen (32-34) in einem gemeinsamen Rohrstutzen (35) münden, der mit einer Hauptförderleitung (25) verbindbar ist.

10. Saugförderanlage für die Entnahme von festem, rieselfähigen Schüttgut aus einer Lagerstätte (2) mit
- mehreren Austragssonden (4, 5, 6) zum Austragen des Schüttguts aus der Lagerstätte (2),
- mehreren Ansaugförderleitungen (11, 12, 13), wobei jede mit jeweils einer Austragssonde (4, 5, 6) verbunden ist,
- einer Leitungsweiche (14), insbesondere nach einem der Ansprüche 1 bis 9, welche auf ihrer Eingangsseite mit den Ansaugförderleitungen (11, 12, 13) und auf ihrer Ausgangsseite mit einer Hauptförderleitung (15) verbunden ist,
- einem Abscheider (16) zum Trennen des Schüttguts von einem Trägerstrom, wobei der Abscheider (16) mit der Hauptförderleitung (15) verbunden ist,
- einer Rückleitung (21) zur wenigstens teilweisen Rückführung des Trägerstroms,
- einem Vakuumerzeuger (20), der in der Hauptförderleitung (15) und/oder der Rückleitung (21) angeordnet ist,
**dadurch gekennzeichnet, dass**
nur eine Rückleitung (21) den rückgeführten Trägerstrom mehrerer Austragssonden (4, 5, 6) zur Lagerstätte (2) zurückführt.

11. Saugförderanlage nach Anspruch 10,
**dadurch gekennzeichnet, dass**
die Austragssonden (4, 5, 6) jeweils eine Ansaugöffnung aufweisen, die unterhalb der Lagerstätte (2) in einem gemeinsamen schüttgutfreien Raum (10) mündet, in welche auch die Rückleitung (21) mündet.

12. Saugförderanlage nach Anspruch 10 oder 11,
**dadurch gekennzeichnet, dass**
die Austragssonden (4, 5, 6) jeweils eine Ausgangsöffnung aufweisen, die an der zugeordneten Ansaugförderleitung (11, 12, 13) angeschlossen ist, welche mit der Leitungsweiche (14) verbunden ist.
